# EUROPEAN PATENT APPLICATION

(11) **EP 4 685 374 A1**
(43) Date of publication of application: **28.01.2026**
(21) Application number: 25188916.8
(22) Date of filing: 11.07.2025
(51) Int. Cl.: F16K 41/06, F16K 1/42, F16K 31/122, F16J 15/20

(54) **SHUTOFF VALVE**

(30) Priority: 25.07.2024 JP 2024119248
(71) Applicant: Tatsuno Corporation, Tokyo 108-0073 (JP)
(72) Inventor: TAKEZAWA, Masahiro, Tokyo, 108-0073 (JP)
(74) Representative: Isarpatent

(57) **Abstract**

[OBJECT] To provide a shutoff valve that can reduce wear on a metal valve body by preventing the pressing force of high-pressure gas and the elastic repulsive force of a spring from acting simultaneously on the valve body when the valve is shut off.

[SOLUTION] A shutoff valve 100 of the present invention includes a casing 2 in which a flow path 3 for a working fluid (e.g., high-pressure hydrogen gas) extending in the direction of the central axis of the casing 2 is formed, a valve stem 1 disposed within the flow path 3 and extending in the direction of the central axis, a valve body 1AT formed at a tip of the valve stem, a valve seat 3AT formed near an end of the flow path 3 in the casing 2, and a valve closing mechanism 10 for pressing the valve body against the valve seat, the valve closing mechanism including an actuator 11 and a valve closing force adjustment mechanism 50, the actuator 11 being provided at the end of the casing 2 opposite the valve seat 3AT in the direction of the central axis and having the function of moving the valve stem 1 in the direction of the central axis, and the valve closing force adjustment mechanism 50 including an elastic repulsive force eliminating device 20 and a valve stem actuation shaft accommodating device 40, the elastic repulsive force eliminating device 20 having a function of eliminating the elastic repulsive force of a valve stem engagement portion actuating spring 4, and the valve stem actuation shaft accommodating device 40 having a function of eliminating the elastic repulsive force of a pressure adjustment spring 44.

## Description

### BACKGROUND

### 1. Field of the Invention

The present invention relates to a shutoff valve used for high-pressure fluids such as high-pressure hydrogen gas, and relates to a shutoff valve having a metallic valve body and valve seat.

### 2. Description of the Related Art

In conventional shutoff valves for high-pressure fluids, such as high-pressure hydrogen gas, a resin valve body has good sealing performance at low pressure, but has a problem of low durability at high pressure. In contrast, when a metal valve body is used, there is no problem with strength, including durability, but there is a problem of low sealing performance at low pressure. In order to solve the problem of sealing performance at low pressure with a metal valve body, it is effective to press the metal valve body against the valve seat in advance with a spring. However, under high pressure, a large pressing force from the high-pressure gas and the elastic repulsive force of the spring act on the valve body at the same time, which causes a problem of wearing out the metal valve body.

As another prior art, a shutoff valve with improved sliding properties, sealing properties, and durability in the sliding portion has been proposed (see JP6972506B). Although this technology is useful, it is not intended to solve the problem that in a shutoff valve in which a metal valve body is pressed against a valve seat by a spring, the pressing force of the high-pressure gas and the elastic repulsive force of the spring act simultaneously on the valve body when the valve is shut off, causing it to wear out.

The content of JP6972506B gazette is incorporated herein by reference in its entirety.

### BRIEF SUMMARY

The present invention has been proposed in consideration of the problems of the prior art described above, and aims to provide a shutoff valve in which a metal valve body is pressed against a valve seat by a spring, which can prevent the pressing force of high-pressure gas and the elastic repulsive force of the spring from acting simultaneously on the valve body when the valve is shut off, thereby reducing wear on the metal valve body.

### [Means for solving the problem]

A shutoff valve 100 of the present invention includes a casing 2 in which a flow path 3 for a fluid (e.g., high-pressure air, high-pressure nitrogen gas) extending in a central axial direction is formed, a valve stem 1 disposed within the flow path 3 and extending in a central axial direction, a valve body 1AT formed at the tip of the valve stem 1, a valve seat 3AT formed in the vicinity of an end of the flow path 3 in the casing 2, and a valve closing mechanism 10 for pressing the valve body 1AT against the valve seat 3AT, the valve closing mechanism 10 being composed of an actuator 11 and a valve closing force adjustment mechanism 50, and the valve closing force adjustment mechanism 50 includes a pressure transmission chamber 5 and a valve stem actuation shaft accommodating device 40, the valve stem actuation shaft accommodating device 40 having a valve stem actuation shaft 13 that engages with the valve stem 1 and is moved in the central axial direction by the actuator 11, and a pressure adjustment spring 44 disposed between the valve stem actuation shaft 13 and the actuator 11, the valve stem actuation shaft 13 having a seal mechanism 30 disposed to prevent fluid from flowing into the actuator 11 side. In the present invention, a spring can be provided between the valve stem 1 and the valve stem actuation shaft 13 in the pressure transmission chamber 5.

Furthermore, in the present invention, the actuator 11 preferably has a shaft support member 14 that engages with the valve stem actuation shaft 13, a transmission member 15 (fluid supply portion bottom portion 12A and spring pressing portion 16) that is connected to the shaft support member 14, an actuator driving fluid supply portion 12 to which an actuator driving fluid (e.g., high pressure air, high pressure nitrogen gas) is supplied or discharged, and a shaft support member actuation spring 18 that is provided at a position opposite to the actuator driving fluid supply portion 12 and engages with the transmission member 15, and the transmission member 15 is preferably moved in the central axial direction by the supply or discharge of driving fluid to the actuator driving fluid supply portion 12 and the shaft support member actuation spring 18.

In the shutoff valve 100 of the present invention, a seal mechanism 30 is provided in the flow path 3 formed in the central axis direction of the casing 2 and through which the valve stem 1 extends, and the seal mechanism 30 has a member (32: C-ring) formed by cutting out a part of the circumferential direction of a ring to form a C-shape, a hollow cylindrical region 33A, and a member (33: hollow cylinder/flange composite member) having a flange 33B extending radially outward on the valve body 1AT side (upper side) of the central axis direction (vertical direction) in the region 33A (of the shutoff valve 100). It is preferable that the hollow cylindrical region 33A of the member 33 is inserted into a central hollow portion 32A of the C-shaped member 32, a backup ring 34 and an O-ring 35 are placed on the flange 33B, and a combination (unit) consisting of the C-shaped member (32: C-ring), the member 33 having the hollow cylindrical region 33A and flange 33B, and the backup ring 34 and O-ring 35 placed on the flange 33B of the member 33 having the hollow cylindrical region 33A and flange 33B is provided in a plurality of stages. Here, it is preferable that regions 31A having a large inner diameter are intermittently formed at equal intervals in the axial direction in the flow passage 3 inside which the valve stem 1 extends, and the C-shaped member (32: C-ring) is fitted into the region 31A.

### EFFECTS OF THE INVENTION

According to the present invention having the above-mentioned configuration, the actuator 11 of the valve closing mechanism 10 can seat the valve body 1AT on the valve seat 3AT, and at that time, the elastic repulsive force of the spring 4 also acts in a direction to seat the valve stem 1 on the valve seat 3AT. However, the elastic repulsive force of the spring 4 can be eliminated by the elastic repulsive force eliminating device 20 of the valve closing mechanism 10, and the pressure adjustment spring 44 can be eliminated by the valve stem actuation shaft accommodating device 40, so that the force that seats the valve body 1AT at the tip of the valve stem 1 on the valve seat 3AT is only the force transmitted from the actuator 11, and the spring 4 and the valve stem actuation shaft accommodating device 40 do not act on the valve body 1AT by the amount of the elastic repulsive force of the pressure adjustment spring 44, thereby damage to the metal valve body 1AT and the valve seat 3AT is reduced.

### BRIEF DESCRIPTION OF THE DRAWINGS

[Figure 1] A cross-sectional view showing an open state of a shutoff valve according to an embodiment of the present invention.
[Figure 2] A partially enlarged cross-sectional view of the part A in Fig. 1.
[Figure 3] A cross-sectional view showing a state immediately after the shutoff valve shown in Fig. 1 is closed.
[Figure 4] A cross-sectional view showing a state after a predetermined time has elapsed since the shutoff valve shown in Fig. 1 was closed.
[Figure 5] A cross-sectional view showing a sealing mechanism in the illustrated embodiment.
[Figure 6] A perspective view of a hollow cylinder-flange composite member used in the seal mechanism shown in Fig. 5.
[Figure 7] A perspective view of a C-ring used in the seal mechanism shown in Fig. 5.
[Figure 8] A cross-sectional view showing a modified example of the embodiment of the present invention.

### DETAILED DESCRIPTION OF THE PREFERRED EMBODIMENTS

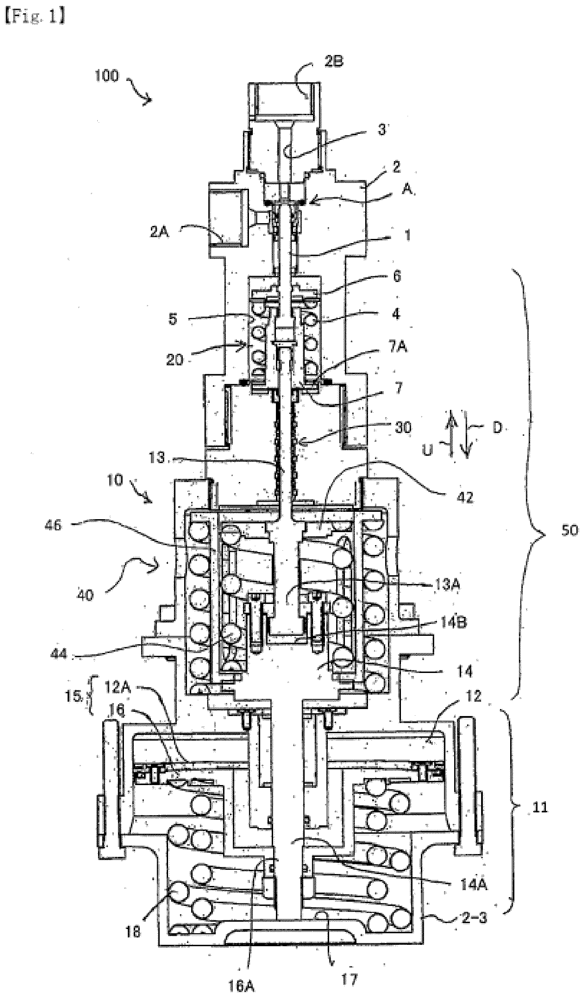

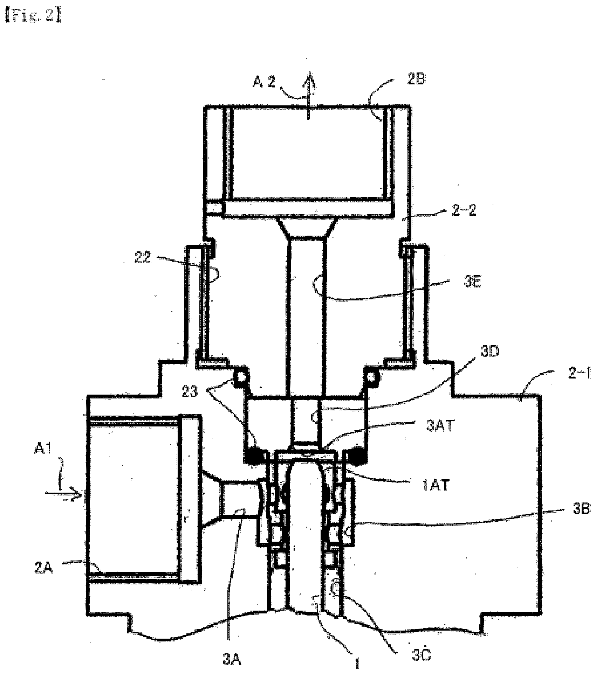

Hereinafter, an embodiment of the present invention will be described with reference to the accompanying drawings. First, an embodiment of a shutoff valve according to the present invention will be described with reference to Figs. 1 to 4. In the illustrated embodiment, high-pressure hydrogen gas is used as a fluid, and a shutoff valve used in a filling device for filling a fuel cell vehicle (FCV) with high-pressure hydrogen gas as a fuel is illustrated. Figs. 1 and 2 show a shutoff valve 100 in an open state. In Fig. 1, the shutoff valve 100 has a casing 2 in which a flow path 3 for high-pressure hydrogen gas extending in the central axis direction (vertical direction in Fig. 1) is formed, a valve stem 1 disposed in the flow path 3 and extending in the central axis direction, a valve body 1AT (tapered portion: see Fig. 2) formed at the tip end of the valve stem 1 (upper end of the valve stem 1 in Fig. 1), a valve seat 3AT (tapered portion: see Fig. 2) formed near the end of the flow path 3 in the casing 2 (lower end of flow path 3D in Fig. 2), and a valve closing mechanism 10 that presses the valve body 1AT against the valve seat 3AT. The details of the portion A in Fig. 1, including a valve body 1AT formed on the valve stem 1 and a valve seat 3AT formed near the end of the flow passage 3, will be described later with reference to Fig. 2.

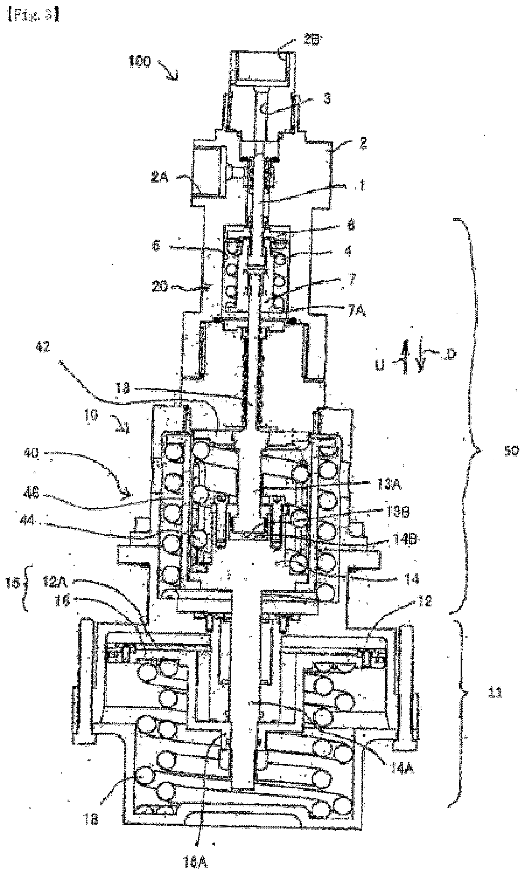

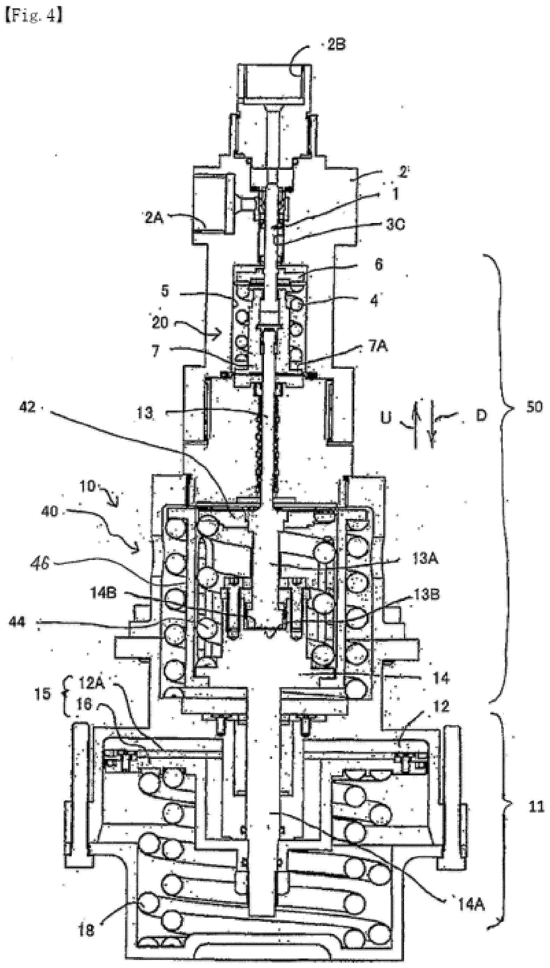

In Fig. 1, the valve closing mechanism 10 includes an actuator 11 and a valve closing force adjustment mechanism 50. The actuator 11 is provided near the end of the flow path 3 on the opposite side to the valve seat 1AT in the central axis direction (lower in Fig. 1), and has the function of moving the valve stem 1 in the central axis direction. The valve closing adjustment mechanism 50 has an elastic repulsive force eliminating device 20, a valve stem actuation shaft accommodating device 40, and a seal mechanism 30. The actuator 11 has an actuator driving fluid supply portion 12 to which an actuator driving fluid (e.g., high-pressure air, high-pressure nitrogen gas) is supplied or discharged, a transmission member 15, and a shaft support member actuation spring 18. The transmission member 15 has a fluid supply portion bottom 12A and a spring pressing portion 16, and has the function of transmitting the supply or discharge of the actuator driving fluid to the actuator driving fluid supply portion 12 to the shaft support member 14 and converting it into a movement in the central axis direction of the shaft support member 14. A shaft support member actuation spring 18 is disposed below the transmission member 15 so as to surround the shaft 14A of the shaft support member 14, and the shaft 14A is connected to the spring pressing portion 16 via the connection portion 16A. The spring 18 urges the shaft support member 14 upward in the central axis direction via the transmission member 15 and the shaft 14A by its elastic repulsive force, thereby urging the valve stem actuation shaft 13 and the valve stem 1 upward in the central axis direction. In Fig. 1, the actuator driving fluid supply portion 12 is supplied with driving fluid by a supply means (not shown), and the central axis direction (vertical direction) dimension of the actuator driving fluid supply portion 12 is larger than that in Figs. 3 and 4. In the state of Figs. 3 and 4 described later, the driving fluid is discharged from the actuator driving fluid supply portion 12 by a discharge means (not shown), and the central axis direction (vertical direction) dimension of the actuator driving fluid supply portion 12 is smaller than that in Fig.

### 1. A reference numeral 2-3 denotes an actuator side casing.

The shaft 14A of the shaft support member 14 is disposed in the actuator-side casing 2-3. The shaft support member 14 is configured to have a larger diameter than the shaft 14A, and supports the valve stem actuation shaft 13. The valve stem actuation shaft 13 extends in the central axial direction and is connected to the valve stem 1. The lower end of the shaft 14A abuts against the stopper 17 at the lower end of the actuator 11 when the shutoff valve 100 shown in Fig. 1 is opened. On the other hand, when the shutoff valve 100 shown in Fig. 3 and is closed, the lower end of the shaft 14A is separated from the stopper 17. In the valve stem actuation shaft accommodation device 40 provided at a position intermediate between the actuator 11 and the elastic repulsive force eliminating device20, the upper part of the shaft support member 14, the lower part of the valve stem actuation shaft 13, the valve stem actuation shaft engagement part 42 engaged with the valve stem actuation shaft 13, and the pressure adjustment spring 44 are disposed in the hollow accommodation part 46. The base 13A of the valve stem actuation shaft 13 is accommodated in a shaft support member recess 14B formed in the upper part of the shaft support member 14, and the shaft support member 14 and the valve stem actuation shaft 13 are connected. The pressure adjustment spring 44 surrounds the shaft support member 14 and the base 13A of the valve stem actuation shaft 13. The lower part of the pressure adjustment spring 44 abuts against the bottom part of the hollow accommodation part 46, and the upper part of the pressure adjustment spring 44 abuts against the valve stem actuation shaft engagement part 42.

The elastic repulsive force eliminating device 20 has a pressure transmission chamber 5, a spring 4, and a spring support member 7. The pressure transmission chamber 5 accommodates the end of the valve stem 1 opposite to the valve body 1AT (the lower end of the valve stem 1) and the end of the valve stem actuation shaft 13 on the valve stem 1 side (the upper end of the valve stem actuation shaft 13). The pressure transmission chamber 5 is provided with a valve stem engagement part 6 that engages with the valve stem 1, and one end (upper end) of the spring 4 is attached to the valve stem engagement part 6. The pressure transmission chamber 5 also accommodates the spring support member 7 that engages with the valve stem actuation shaft 13, and the spring support member 7 has a flange 7A (flange of the spring support member) that can come into contact with the other end (lower end) of the spring 4. The spring support member 7 accommodates the end (upper end) of the valve stem actuation shaft 13 on the valve stem 1 side, and the valve stem actuation shaft 13 and the valve stem 1 are connected via the spring support member 7 and the valve stem engagement part 6.

High-pressure hydrogen gas from a filling device (not shown) flows into the pressure transmission chamber 5 through an intake port 2A of the casing 2, an intake port side flow path 3A (see Fig. 2), and a valve actuation flow path 3C (see Fig. 2). Therefore, the pressure of the high-pressure hydrogen gas acts on the pressure transmission chamber 5. When the pressure in the pressure transmission chamber 5 rises above a predetermined value (set on a case-by-case basis by the elastic repulsive force of the pressure adjustment spring 44), the valve stem actuation shaft 13 moves in a direction away from the spring 4 (downward) due to the pressure difference between the pressure transmission chamber 5 and the hollow accommodation portion 46.

In Fig. 1, a high-pressure hydrogen gas flows into the shutoff valve 100 from the intake port 2A and is discharged from the discharge port 2B toward the downstream (FCV) equipment. Details of the high-pressure hydrogen gas flow path 3 that communicates from the intake port 2A to the discharge port 2B are shown in Fig. 2, which is a partially enlarged view of part A in Fig. 1. In Fig. 2, the metal casing 2 has a main body side casing 2-1 and a discharge side casing 2-2, and the main body side casing 2-1 and the discharge side casing 2-2 are joined by a casing screw portion 22. The main body side casing 2-1 has an intake port 2A for high-pressure hydrogen gas, and the intake port 2A communicates with a valve actuation flow path 3C via an intake port side flow path 3A and a flow path space 3B. The flow path space 3B communicates with a discharge port side flow path 3D formed in the main body side casing 2-1 and a discharge port side flow path 3E formed in the discharge side casing 2-2, and communicates with the discharge port 2B for high-pressure hydrogen gas. A metallic valve stem 1 is disposed in the hollow of the valve actuation flow path 3C and flow path space 3B of the main body casing 2-1, and the tip (the upper end in Fig. 2) of the valve stem 1 forms a valve body 1AT having a tapered surface. A tapered surface is formed at the end of the flow path space 3B side of the discharge port side flow path 3D, and this tapered surface forms a valve seat 3AT. The valve seat 3AT and the valve body 1AT at the tip of the valve stem 1 form a shutoff valve. A reference numeral 23 denotes an O-ring.

In Figs. 1 and 2, which show the shutoff valve in an open state, the tapered surface that is formed at the end of the discharge port side flow path 3D on the flow space 3B side and forms the valve seat 3AT is separated from the tapered surface of the tip of the valve stem 1 that constitutes the valve body 1AT. On the other hand, in Figs. 3 and 4, which show the shutoff valve in a closed state, the tapered surface of the valve body 1AT is seated on the tapered surface that constitutes the valve seat 3AT. In Fig. 2, when the shutoff valve is open, a high-pressure hydrogen gas flows in the direction of an arrow A1 supplied from the suction port 2A flows into the flow space 3B through the suction port side flow path 3A. The high-pressure hydrogen gas that flows into the flow space 3B is discharged from the discharge port 2B downstream (toward an FCV side equipment: not shown) through the discharge port side flow path 3D and the discharge port side flow path 3E formed in the discharge port side casing 2-2 in the direction of an arrow A2.

For example, when the shutoff valve 100 is changed from the closed state shown in Figs. 3 and 4 to the open state shown in Fig. 1, an actuator driving fluid is supplied by a supply means (not shown) to the actuator driving fluid supply part 12. When the driving fluid is supplied to the actuator driving fluid supply part 12, the dimension of the actuator driving fluid supply part 12 in the central axial direction (vertical direction) increases due to fluid pressure, and the fluid supply part bottom part 12A and the spring pressing part 16 (transmission member 15) move down in the direction of an arrow D against the elastic repulsive force of the shaft support member actuating spring 18.

Since the spring pressing portion 16 is connected to the shaft 14A of the shaft support member at the connecting portion 16A, when the spring pressing portion 16 descends, the shaft support member 14 descends in the direction of the arrow D. When the shaft support member 14 descends in the direction of the arrow D, the valve stem actuation shaft 13 connected to the shaft support member 14 via the shaft support member recess 14B also descends in the direction of the arrow D. As the valve stem actuation shaft 13 descends in the direction of the arrow D, the valve stem 1 also descends in the direction of the arrow D via the spring support member 7. When the valve stem 1 descends, the valve body 1AT (tapered surface, Fig. 2) at the tip of the valve stem 1 separates from the valve seat 3AT (tapered surface, Fig. 2) formed in the discharge port side flow path 3D, and the shutoff valve 100 opens.

Figure 3 shows a state in which the shutoff valve 100 is closed after being opened and allowing a high-pressure hydrogen gas to flow (Fig. 1). When changing from the state shown in Fig. 1 to the state shown in Fig. 3, the actuator driving fluid is discharged from the actuator driving fluid supply part 12. When the driving fluid is discharged and the pressure in the actuator driving fluid supply part 12 decreases, the elastic repulsive force of the shaft support member actuating spring 18 causes the dimension of the actuator driving fluid supply part 12 in the central axis direction (up and down direction) to decrease. As a result, the fluid supply part bottom part 12A and the spring pressing part 16 rise in the direction of the arrow U.

Because the spring pressing portion 16 is connected to the shaft 14A at the connecting portion 16A, when the spring pressing portion 16 rises, the shaft support member 14 rises in the direction of the arrow U. When the shaft support member 14 rises in the direction of the arrow U, the elastic repulsive force of the pressure adjustment spring 44 acts on the valve stem actuation shaft engagement portion 42, causing the valve stem actuation shaft 13 to rise in the direction of the arrow U. As the valve stem actuation shaft 13 rises in the direction of the arrow U, the spring support member 7 presses the spring 4 and the valve stem engagement portion 6, causing the valve stem 1 to rise. As the valve stem 1 rises, the valve body 1AT (tapered surface, Fig. 2) at the tip of the valve stem 1 sits on the valve seat 3AT (tapered surface) formed in the discharge port side flow path 3D, and the shutoff valve 100 closes.

With the shutoff valve 100 according to the embodiment shown in the figures, when a predetermined time has elapsed from the state shown in Fig. 3, the pressing force from the pressure adjustment spring 44 is reduced and the elastic repulsive force of the spring 4 disappears. The mechanism will be described with reference to Fig. 4. As shown in Fig. 3, even when the tapered surface 1AT (Fig. 2) at the tip of the valve stem 1 is seated on the tapered surface 3AT (valve seat: Fig. 2) and the shutoff valve 100 is closed, the high-pressure hydrogen gas flowing in from the suction port 2A flows through the suction port side flow path 3A and the flow path space 3B and into the valve actuation flow path 3C. In Fig. 4, which shows a state after a predetermined time has elapsed since the shutoff valve 100 was closed, the high-pressure hydrogen gas that has flowed through the valve actuation flow path 3C flows into the pressure transmission chamber 5. The pressure of the high-pressure hydrogen gas that has flowed in moves the valve stem actuation shaft 13 toward the hollow accommodation portion 46, which is not under pressure. At the same time, the spring support member 7 engaged with the valve stem actuation shaft 13 also descends in the direction of the arrow D (the direction in which the valve body 1AT of the valve stem 1 moves away from the valve body 1AT).

When the flange 7A of the spring support member 7 descends in the direction of the arrow D by a predetermined amount or more, the spring 4 moves from a state in which it abuts the flange 7A (as shown in Fig. 3) to a state in which it is separated from the flange 7A as shown in Fig. 4. In other words, the spring 4 compressed by the raised flange 7A is released from the compressed state and enters an extended state as the flange 7A descends and separates from the flange 7A. As a result, the elastic repulsive force of the spring 4 pressing the valve stem engagement portion 6 in the direction of the arrow U disappears.

As a result, the force for closing the valve is reduced by the elastic repulsive force of the spring 4, and only the pressure of the high-pressure hydrogen gas remains. In this way, by adjusting the force pressing the valve stem 1 according to the pressure of the acting fluid, the pressing force can be reduced by the amount of the applied fluid pressure. Therefore, it is possible to prevent the application of a force greater than that required for closing the valve, thereby reducing damage to the valve body 1AT and the valve seat 3AT.

Here, the position of the valve stem actuation shaft 13 in the central axial direction moves due to the up and down movement of the flange 7A of the spring support member 7, but since the valve stem 1 is connected to the valve stem engagement portion 6, the up and down movement of the flange 7A of the spring support member 7 and the up and down movement of the valve stem 1 are not synchronized. Therefore, the position of the valve stem 1 in Figs. 3 and 4 is the same, and the tapered surface (Fig. 2) of the valve body 1AT at the tip of the valve stem is maintained seated on the valve seat 3AT (Fig. 2). Although not shown, it is also possible to open and close the shutoff valve by an electric motor instead of opening and closing using fluid pressure.

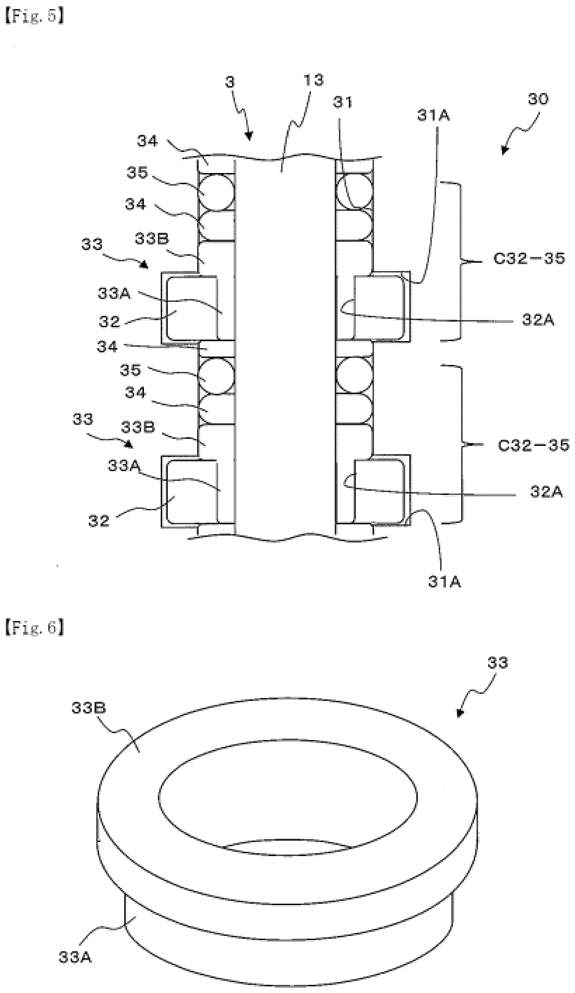

Next, the sealing mechanism of the shutoff valve shown in Figs. 1 to 4 will be described with reference to Figs. 5 to 7. In order to prevent high-pressure hydrogen from leaking from the part where the valve stem 1 slides, a multi-stage seal is required, and therefore the shutoff valve shown in Figs. 1 to 4 is provided with a sealing mechanism. In Figs. 1, 3, and 4, a sealing mechanism 30 is provided at the position where the valve stem actuation shaft 13 slides. In Fig. 5, the sealing mechanism 30 has a structure in which a unit combining an O-ring 35, a backup ring 34, a hollow cylinder-flange composite member 33, and a C-ring 32 is stacked in multiple stages. In the flow path 3 formed in the central axis direction (vertical direction) of the casing 2 (Figs. 1 to 4) and in which the valve stem actuation shaft 13 extends, a hollow part 31 in which the valve stem actuation shaft 13 slides has a plurality of regions 31A with a large inner diameter (expanded diameter part) formed intermittently at equal intervals in the central axis direction (two places in the example shown in Fig. 5).

The C-ring 32 in the seal mechanism 30 installed in the hollow portion 31 where the valve stem actuation shaft 13 slides has a shape in which a part of the circumferential direction of the annulus is cut out, and is fitted into the expanded diameter portion 31A of the hollow portion 31. A hollow cylinder/flange composite member 33 is arranged above the C-ring 32. The hollow cylinder/flange composite member 33 has a hollow cylindrical region 33A (main body portion) extending in the central axis direction (up and down direction), and the hollow cylinder/flange composite member 33 is inserted and arranged in the hollow portion 32A at the radial center of the C-ring 32. A flange 33B extending radially outward is formed on the main body portion 33A of the hollow cylinder/flange composite member 33, and a backup ring 34 and an O-ring 35 are placed on the flange 33B. A backup ring 34 is further provided above the O-ring 35, and the O-ring 35 is sandwiched between the two backup rings 34, 34 from above and below. The sealing mechanism 30 is configured by stacking multiple units (combinations C32-35) each consisting of an O-ring 35, two backup rings 34, a hollow cylinder-flange composite member 33, and a C-ring 32. Figure 5 shows a state in which the combinations C32-35 are stacked in two stages.

By adopting the above configuration, it is possible to easily arrange multiple stages of seals by forming the enlarged diameter portion 31A into which the C-ring 32 fits without increasing the inner diameter of the portion (hollow portion) where the valve stem actuation shaft 13 slides, and to reliably prevent leakage of high-pressure hydrogen gas. The seal mechanism 30 can be arranged at any position where the valve stem 1 slides, other than the position where the valve stem actuation shaft 13 slides. Although not shown, a cup seal can be used instead of the O-ring 35. In that case, it is preferable to arrange the cup seal so that the upward direction in Figs 1, 3, and 4 is the open direction of the cup seal.

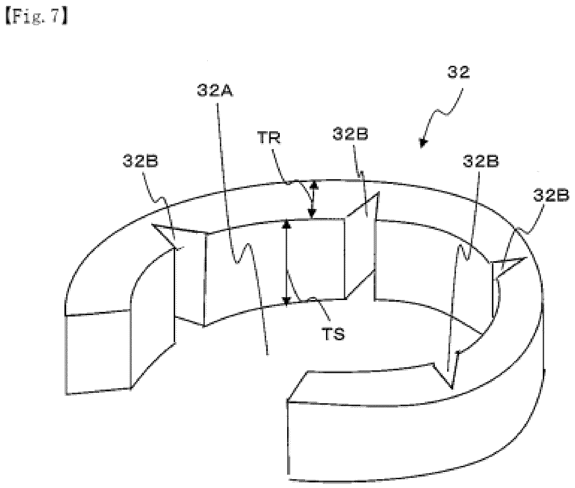

The hollow cylinder/flange composite member 33 and the C-ring 32 are shown in Figs. 6 and 7. The backup ring 34 is made of resin, and is provided to prevent a part of the O-ring 35 from extending due to high pressure and entering into the gap with the inner wall (so-called "O-ring protrusion"), which may cause the O-ring 35 to break at the part that has entered.

The hollow cylinder/flange composite member 33 shown in Fig. 6 is made of metal and has a hollow cylindrical body 33A extending in the central axis direction (up and down direction) and a flange 33B located above the body 33A and extending radially outward. When installing the seal mechanism 30, the hollow cylindrical part of the body 33A is inserted and fitted into the hollow part 32A of the C-ring 32. This prevents the C-ring 32 from shrinking radially inward. When installing the seal mechanism 30, the backup ring 34 and the O-ring 35 are placed on the flange 33B extending radially outward.

The C-ring 32 shown in Fig. 7 is made of metal, and is formed in a C-shape with a part of the ring cut out in the circumferential direction, and has a plurality of (four in the illustrated embodiment) slits 32B formed at approximately equal intervals in the circumferential direction. By forming the slits 32B, the C-ring 32 can easily expand radially outward, and the main body 33A of the hollow cylinder-flange composite member 33 can easily be inserted into the hollow portion 32A at the radial center of the C-ring 32. The slits 32B may be formed in less than three places or in five places or more (for example, two to six places). The dimension TS of the C-ring 32 in the central axis direction (the vertical direction in Figs. 1, 3, and 4) is set to be thicker than the radial dimension TR. The ratio of the radial dimension TR to the central axis dimension TS of the C-ring 32 is set in the range of 1:1 to 1:10. This is because if the axial dimension TS of the C-ring 32 is thick, the C-ring 32 is less likely to contract in the radial direction. The central axis dimension TS of the C-ring 32 is set to a value that can resist the shear force acting in the central axis direction. The radial thickness of the C-ring 32 is thin at the slit 32B. As described above, the body 33A of the hollow cylinder/flange composite member 33 is inserted into the hollow portion 32A of the C-ring 32, and the flange 33B of the hollow cylinder/flange composite member 33 arranged adjacent to and above the C-ring 32 covers the C-ring 32. Therefore, even if the radial thickness is thinned by the slit, there is no risk of impairing the function of the seal mechanism 30.

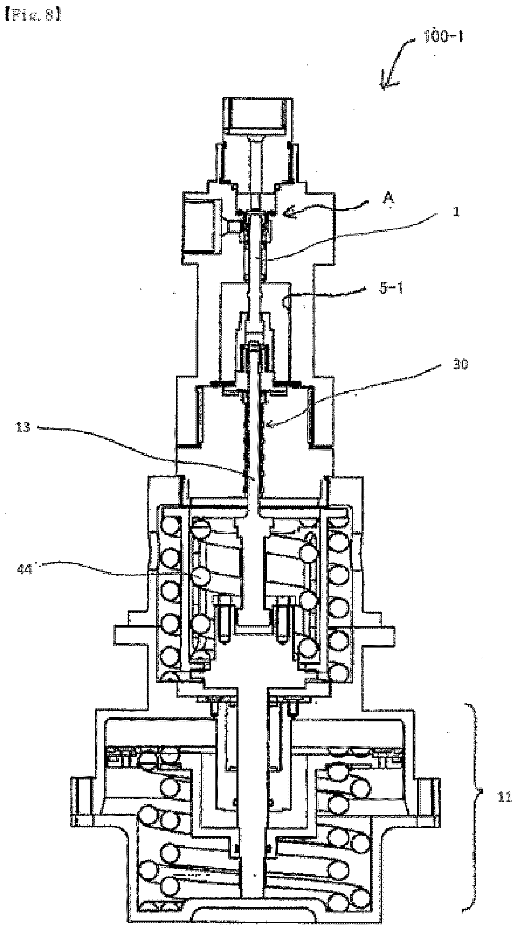

Figure 8 shows a modified example of the embodiment described in Figs. 1 to 7. In the shutoff valve 100 of the embodiment shown in Figs. 1 to 7, the spring 4 is provided in the pressure transmission chamber 5, but in the modified example shown in Fig. 8, no spring is provided. In the modified example of Fig. 8, the spring 4 is not provided, but when a fluid flows into the shutoff valve 100, the seal mechanism 30 is present, so that fluid pressure is applied to the pressure transmission chamber 5-1. Since the fluid pressure is applied to the upper part of the valve stem actuation shaft 13 that presses the valve stem 1, a force opposing the pressure adjustment spring 44 is applied, and the pressing force on the valve stem 1 can be reduced. Therefore, the pressing force on the valve stem 1 does not become an excessive pressing force that is the pressure from the actuator 11 plus the fluid pressure, so that damage to the valve seat 3AT and the valve body 1AT can be suppressed. The other configurations and effects of the modified example of Fig. 8 are the same as those of the embodiment of Figs. 1 to 7.

It should be noted that the illustrated embodiment is merely an example and is not intended to limit the technical scope of the present invention.

### [Explanation of symbols]

1 valve stem
1AT valve body
2 casing
3 flow path
3AT valve seat
4 spring
5, 5-1 pressure transmission chambers
6 valve stem engagement portion
7 spring support member
7A flange (flange of spring support member)
10 valve closing mechanism
11 actuator
12 actuator driving fluid supply portion
12A bottom of fluid supply portion
13 valve stem actuation shaft
14 shaft support member
15 transmission member
16 spring pressing part
20 elastic repulsion eliminating device
30 sealing mechanism
31A area with large inner diameter in flow path
32 C-shaped member (C-ring)
32A: hollow portion of C-ring
32B C-ring gap
33 hollow cylinder/flange composite member
33A hollow cylindrical region (main body) of hollow cylinder-flange composite member
33B flange of hollow cylinder-flange composite member
34 backup ring
35 O-ring
40 valve stem actuation shaft accommodating device
50 valve closing force adjustment mechanism
100 shutoff valve

## Claims

1. A shutoff valve comprising:
a casing having a flow passage for fluid extending in a central axis direction of the casing;
a valve stem disposed in the flow passage and extending in the central axis direction;
a valve body formed at a tip of the valve stem;
a valve seat formed in the casing near an end of the flow passage; and
a valve closing mechanism that presses the valve body against the valve seat, wherein said valve closing mechanism is composed of an actuator and a valve closing force adjustment mechanism;
said valve closing force adjustment mechanism includes a pressure transmission chamber and a valve stem actuation shaft accommodating device;
said valve stem actuation shaft accommodating device includes a valve stem actuation shaft that engages with the valve stem and is moved in the central axial direction by the actuator, and a pressure adjustment spring disposed between the valve stem actuation shaft and the actuator; and
said valve stem actuation shaft is provided with a seal mechanism for preventing fluid from flowing into the actuator side.

2. The shutoff valve as claimed in claim 1, further comprising a spring provided in the pressure transmission chamber between the valve stem and the valve stem actuation shaft.

3. The shutoff valve as claimed in claim 1 or 2, wherein said actuator comprises:
a shaft support member that engages with the valve stem actuation shaft;
a transmission member that is connected to the shaft support member;
an actuator driving fluid supply portion to which an actuator driving fluid is supplied or discharged; and
a shaft support member actuating spring that is provided at a position facing the actuator driving fluid supply portion and engaged with the transmission member, wherein said transmission member moves in the central axis direction by the supply or discharge of the driving fluid to the actuator driving fluid supply portion and the shaft support member actuating spring.

4. The shutoff valve as claimed in claim 1 or 2 further comprising a seal mechanism provided in the flow passage formed in the central axis direction of the casing and through which the valve stem extends, said seal mechanism comprises:
a member formed in a C-shape by cutting out a portion of a circumferential direction of a ring; and
a member having a hollow cylindrical region and a flange extending radially outward on the valve body side in the central axis direction in the region, the hollow cylindrical region being inserted into a central hollow portion of the C-shaped member, wherein a backup ring and an O-ring are placed on the flange, and a combination of the C-shaped member, the member having the hollow cylindrical region and the flange, and the backup ring and the O-ring placed on the flange of the member having the hollow cylindrical region and the flange is provided in multiple stages.
